Europäisches Patentamt

European Patent Office

Office européen des brevets

(19)

(11) Publication number: **0 010 417**
**B1**

(12) **EUROPEAN PATENT SPECIFICATION**

(45) Date of publication of patent specification: 24.11.82

(51) Int. Cl.³: **B 62 L 1/06**

(21) Application number: 79302208.8

(22) Date of filing: 15.10.79

(54) Brake device for a cycle.

(30) Priority: 14.10.78 JP 141137/78 U
05.03.79 JP 28292/79

(43) Date of publication of application:
30.04.80 Bulletin 80/9

(45) Publication of the grant of the patent:
24.11.82 Bulletin 82/47

(84) Designated Contracting States:
CH DE FR GB IT

(56) References cited:
AT - B - 90 398
DE - U - 1 627 054
FR - A - 428 059
FR - A - 2 142 650

(73) Proprietor: SHIMANO INDUSTRIAL COMPANY
LIMITED
77, 3-cho Oimatsu-cho Sakai-shi
Osaka (JP)

(72) Inventor: Nagano, Masashi
1975-11 Kanaoka-cho
Sakai-shi, Osaka (JP)
Inventor: Someya, Itsuo
6-215, Ever Green Kanaoka 704-2, Kanaoka-cho
Sakai-shi, Osaka (JP)

(74) Representative: Szczuka, Jan Tymoteusz et al,
Cruikshank & Fairweather 19 Royal Exchange
Square
Glasgow G1 3AE Scotland (GB)

Courier Press, Leamington Spa, England.

EP 0 010 417 B1

Brake device for a cycle

The present invention relates to a centre-pull type caliper brake device for a cycle, which has a mounting member for mounting on said cycle a pair of brake arms pivotally mounted in spaced relationship on said mounting member and having respective brake shoes, a bolt for securing said mounting member to the cycle frame, and control wire engagement means for connection of a control wire to said device so that when the control wire is pulled the brake arms are pivoted to bring the brake shoes towards the cycle wheel rim until brake blocks mounted in said shoes press against the wheel rim thereby exerting a braking action, each of said brake blocks fixed in said shoes on said brake arms having a braking surface facing, a wheel rim disposed between said brake arms and having upper and lower surfaces and a pair of side surfaces extending from said braking surface. Such a caliper brake is known from FR—A—2142650. This prior specification does not disclose a brake of this type with an elongate slot for providing vertical adjustment of the brake mounting member on the cycle.

Conventionally such calliper brakes are so constructed that the fixing arm is fixed to the cycle frame by means of a fixed bolt, the brake blocks are mounted in brake shoes formed separately from the brake arms, the distal ends of the brake arms being formed with bases for the brake shoes, said bases being formed with slots vertically extending, and the shoes being mounted with the aid of connectors extending through the slots so that the shoes are vertically adjustable relative to said bases in order to accommodate holders, are each vertically adjustable corresponding brake mounting positions for different kinds, types and usage of cycles.

Accordingly, each of the brake shoes, which are adjusted in their mounting positions in the manner described above, changes its radial separation from the pivoting axis of each brake arm. As a result, the length of travel during the pivotal movement of each brake shoe with respect to a given stroke length of the control wire is not constant when the wire is pulled in order to effect braking.

From DE—U—1627054 there is known a brake device where a mounting bolt extends through an elongate slot in the mounting member. However, adjustment of the brakeshoe is not caused by relative movement between said bolt and slot, but by an additionally provided adjustment device. Furthermore the brake device shown is not a centre-pull type brake and indeed insofar as can be ascertained from the disclosure of this document, the brake device has a quite different type of action from centre-pull type or indeed any other type of brake device used to any significant extent in the art, the brake block being displaced longitudinally relative to an elongate mounting member and its mounting position and hence presumably requiring a rather inconvenient mounting disposition in order to achieve a braking action on the rim of a bicycle wheel.

From AT—B—90398 there is known a centre-push type of calliper brake in which the brake shoes are formed integrally with the brake arms and are inclined thereto at an angle of more than 90°. This prior specification does not disclose a centre-pull type calliper brake and in particular does not disclose a brake of this type with an elongate slot for providing vertical adjustment of the brake mounting member on the cycle. Thus since neither the brake shoes nor the mounting member disposition on the cycle can be changed adjustment of the disposition of the brake blocks relative to the wheel is for practical purposes effectively precluded.

In certain conventional constructions of centre-pull type calliper brake also, the control wire is connected across the ends of the brake arms remote from the brake shoes. This results in a rather complicated construction which is troublesome to assemble and more susceptible to failure.

It is an object of the present invention to provide a brake device for a cycle which avoids one or more of the above disadvantages.

The present invention provides a centre-pull type calliper brake device for a cycle, which has a mounting member for mounting on said cycle a pair of brake arms pivotally mounted in spaced relationship on said mounting member and having respective brake shoes, a bolt for securing said mounting member to the cycle frame, and control wire engagement means for connection of a control wire to said device so that when the control wire is pulled the brake arms are pivoted to bring the brake shoes towards the cycle wheel rim until brake blocks mounted in said shoes press against the wheel rim thereby exerting a braking action, each of said brake blocks fixed in said shoes on said brake arms having a braking surface facing a wheel rim disposed between said brake arms and having upper and lower surfaces and a pair of side surfaces extending from said braking surface characterized in that said mounting member has a slotted portion extending generally in the direction of pulling of said control wire, control wire sheath engagement means being positioned on said slotted portion and a slot in said portion being substantially elongate and extending in said direction of pulling of the control wire, said securing bolt extending through said elongate slot to secure the mounting member to the cycle frame, relative movement between said bolt and slot providing for vertical adjustment of the mounting member on the cycle frame.

Preferably said brake shoes are formed integrally with said brake arms and said upper surface of each of said brake blocks is convexly arcuate and has a radius of curvature smaller than that of the outer peripheral edge of said rim.

With a brake device of the present invention, when the fixed position of the mounting member on the cycle frame is changed relative to the wheel rim, the position of the whole brake device on the cycle frame is vertically adjusted, whereby the brake shoes are simply and correctly adjusted in their position relative to the wheel rim without the necessity for changing the radial separation between each brake shoe and the pivoting axis of the respective brake arm on the mounting member.

The brake device of the invention also has on the slotted portion of the mounting arm a control wire sheath engagement means for supporting the outer sheath guiding the control wire. Preferably each brake arm is generally in the form of a bell crank lever having a first arm having a distal end at or in proximity to which is provided a respective brake shoe and a second arm extending towards the second arm of the other of said brake arms, said second arms providing a part of the control wire engagement means for engagement with a retainer provided at the free end of the control wire. This avoids the abovementioned disadvantageous form of the conventional manner of connection of the control wire to the brake arms.

By making the control wire sheath engagement means positionally adjustable relative to the mounting member in the direction of pulling of the control wire, the separation of the outer sheath end and the control wire end can be readily adjusted.

Further preferred features of the invention will appear from the following description given by way of example of some preferred embodiments of the invention illustrated with reference to the accompanying drawings in which:

Fig. 1 is a partially cutaway front elevation of a first embodiment of a calliper brake device of the invention shown in use on a cycle frame;

Fig. 2 is a right-hand side elevation of the device of Fig. 1;

Fig. 3 is a sectional side elevation taken on the line III—III in Fig. 1;

Fig. 4 is a rear elevation of the brake arm only of Figs. 1 to 3;

Fig. 5 is a side elevation of the brake arm of Fig. 4 as viewed in the direction of the arrow A;

Fig. 6 is a front elevation of a second embodiment;

Fig. 7 is a right-hand side elevation of the device of Fig. 6;

Figs. 8 and 9 are sectional front and side elevations of the control wire retainer and engagement means employed in the device of Figs. 6 and 7;

Fig. 10 is a front elevation of a third embodiment;

Fig. 11 is a right-hand side elevation of the device of Fig. 1P;

Fig. 12 is a sectional side elevation taken on the line X—X in Fig. 10; and

Fig. 13 is a perspective view of the mounting member and control wire sheath engagement means of the device of Figs. 10 to 12.

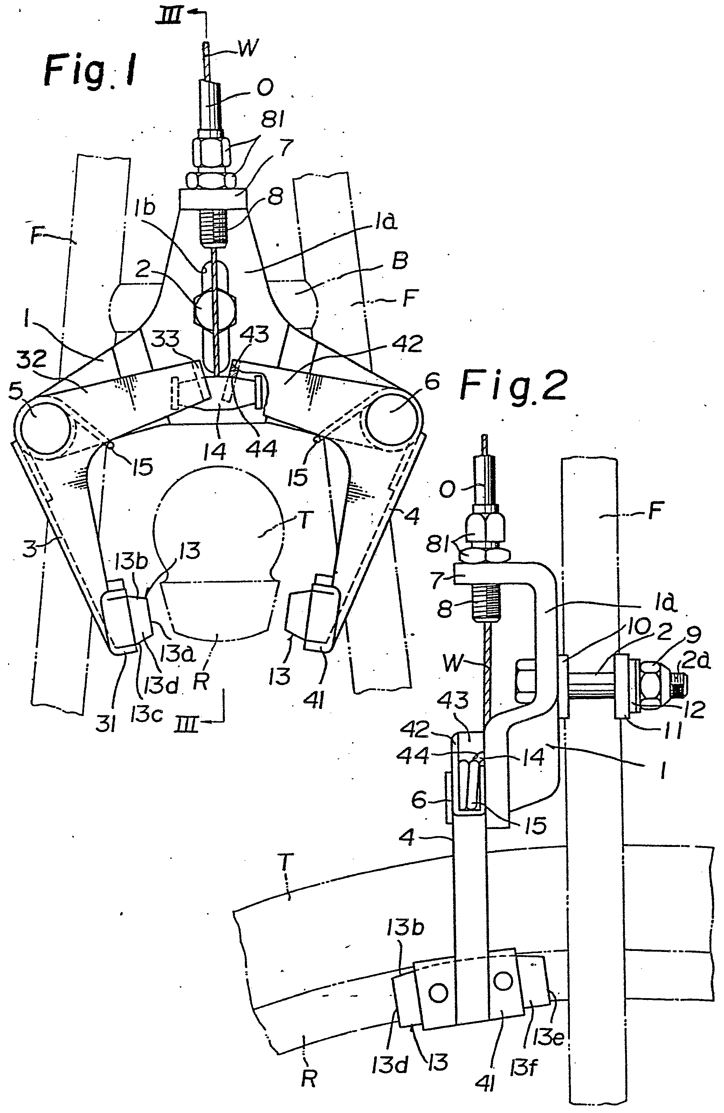

In Figs. 1 to 5, is shown a first embodiment of the invention comprising a mounting member 1 extending generally horizontally, and secured by a bolt 2 to a bar B of the cycle frame which bar B spans upright frame members F. A pair of brake arms 3, 4 is pivotally at opposite sides of the mounting member 1 on pivot pins 5 and 6. The mounting member 1, as shown in Fig. 1, has an upwardly extending elongate portion 1a at a horizontally intermediate position. This portion 1a is forwardly cranked at its upper end into a generally L-shaped form to provide a control wire sheath engagement means 7 for supporting an outer sheath O of the control wire W which is described, in further detail below. The portion 1a also has a vertically extending slot 1b.

The sheath engagement means 7 includes a threaded bore in its cranked portion, an outer stop 8 for holding one end of the outer sheath O being screwed into the threaded bore and held in position by a lock nut 81.

The securing bolt 2 has a head of a diameter larger than the width of the slot 1b and at its other end a screw threaded portion 2a for engagement with a nut 9. Between the head and the nut 9 are inserted a liner 12 and a pair of washers 10 and 11 in contact with the outer periphery of the bar B. The securing bolt 2 is inserted through the slot 1b and then passes through a bore in the bar B and is retained in position by the nut 9, thereby securing the mounting member 1 to the bridge B so that the mounting member is adjustable vertically in its position relative to the frame members B, F and the wheel rim R over a range defined by the slot 1b.

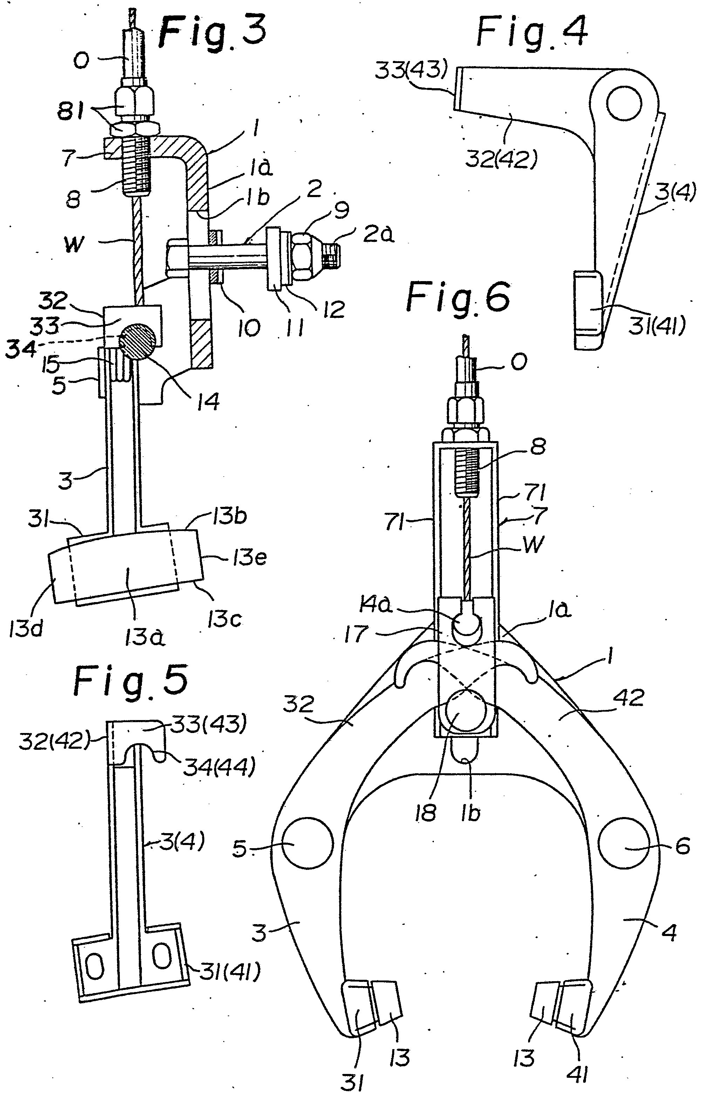

The brake arms 3 and 4 are laterally symmetrical as shown in Fig. 1, and may be formed by pressing of a metallic plate as shown in Figs. 4 and 5. At the distal ends of the brake arms 3 and 4 are provided brake shoes 31 and 41 formed integrally with the brake arms. The shoes 31 and 41 are generally box-shaped and open at one side, and brake blocks 13. The brake arms 3 and 4 are generally in the form of bell-crank levers one arm of which carries the brake shoes 31, 41 and the second of which is arranged to extend inwardly from the pivot pins 5 and 6 towards the horizontal center of the mounting member 1, the second arms 32 and 42 being bent at their distal ends towards the mounting member 1 so as to form cranked portions 33 and 43. The cranked portions 33 and 43 are provided at their lower sides with downwardly facing semicircular cutouts 34 and 44.

The control wire W is inserted movably into the outer sheath O to be guided thereby and is attached at one end to a brake lever (not shown). The free end of the control wire W has fixed to it a retainer or engagement body 14 of a barrel-like shape which is engageable with the cutouts 34 and 44. The retainer 14 is engaged by the cutouts 34 and 44 to hold the control wire W. When the brake lever is operated to pull the control wire W, the retainer 14 is raised and the extensions 32 and 42 moved upwardly causing the brake arms 3 and 4 to pivot around the pivot pins 5 and 6.

In addition, as shown in Figs. 1 and 2, return springs 15 acting on the brake arms are provided.

With the above construction, when the brake lever is operated to pull the control wire W, the brake arms 3, 4 pivot as described above to bring the brake blocks 13 into contact with a wheel rim R bearing a tyre T on either side of said rim R thereby to exert the braking action.

When the above described brake device needs its mounting position on the cycle frame to be changed, the nut 9 is loosened, and the mounting member 1 is moved vertically along the slot 1b with respect to the securing bolt 2 and is then fixed in its new position by retightening of the nut 9, thereby adjusting the brake blocks 13 in their vertical position by a corresponding vertical displacement. Thus, the brake device as a whole follows the vertical displacement of the mounting member 1 with the result that the brake shoes 13 do not require separate and individual adjustment. Moreover, in this adjustment, the radial separation between the brake arms pivoting axes and the brake blocks mounting positions is always constant, so that the length of travel of each brake block 13 remains constant, in other words, the brake block travel relative to the stroke of the control wire is not changed thereby keeping the braking ratio constant.

The brake blocks 13 each comprise a block having a braking surface 13a facing the wheel rim R, upper and lower surfaces 13b and 13c and a pair of side surfaces 13d and 13e in continuation of said braking surface 13a, and a rear surface 13f. The upper surface 13b, as shown in Figs. 2 and 3, is arcuate having a radius of curvature smaller than that of the wheel rim R, so that even when the mounting member 1 pivots forwardly or rearwardly (left or right in Fig. 2) during the adjustment, the brake blocks 13 can be prevented from contacting at their upper surfaces 13b with the radially outer edge of the rim R or with the tyre T.

In the abovedescribed embodiment, the retainer 14 may be replaced by rollers 16 as shown in Figs. 6 to 9, the rollers 16 being engaged with the second arms 32 and 42. Alternatively, the control wire sheath engagement means 7, which is formed integrally with the mounting member 1 in the above described embodiment could be formed separately therefrom and mounted thereon so as to be positionally adjustable in the direction of pulling of the control wire.

In a second embodiment shown in Figs. 6 to 9, an enlarged diameter body 14a is fixed to the free end of the control wire W and supports a retainer 17 generally in the form of an inverted U-shape. Two rollers 16 are rotatably supported on the retainer 17 by a transverse shaft 18, and engaged with the second arms 32 and 42 of the bell crank brake arms 3 and 4 respectively. In this instance, one roller 16 is adequate normally, but it is preferred that two rollers are provided each contacting a respective brake arm because the brake arms 3 and 4 move in opposite directions to each other when the control wire is pulled.

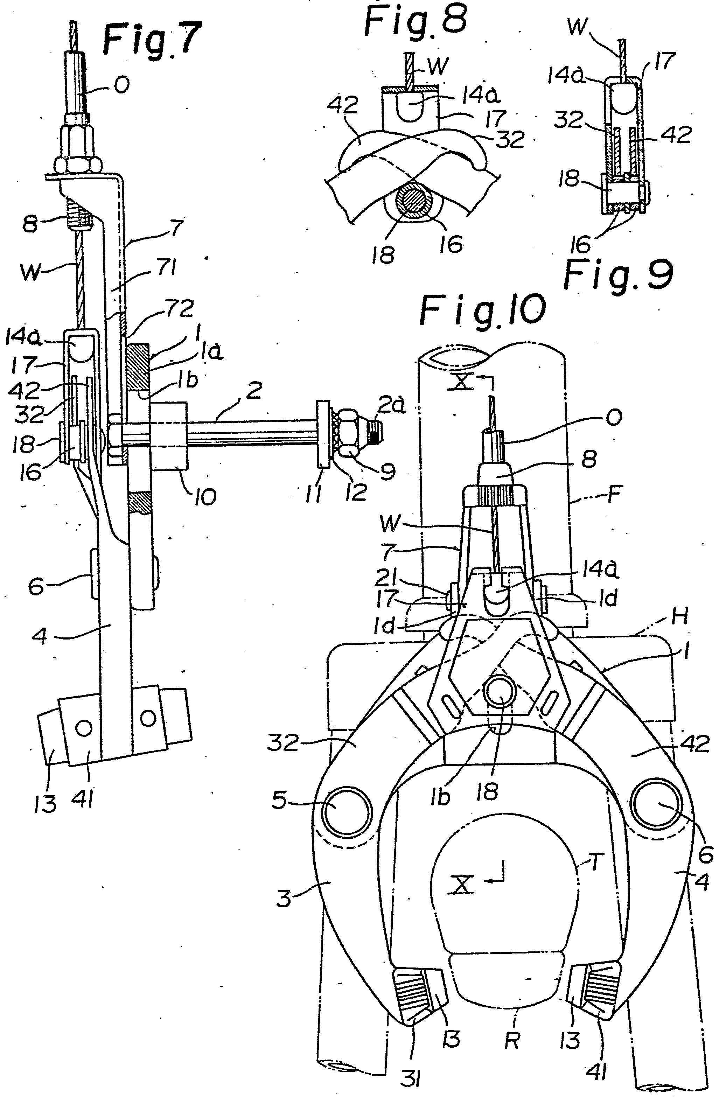

The control wire sheath engagement means 7 in Figs. 6 to 9, which is elongate in the direction of pulling of the wire W as shown in Figs. 6 and 7, carries at its upper end an outer stop 8, has at both lateral sides reinforcements 71 extending longitudinally of the sheath engagement means 7, and at the centre of width a slot 72 extending lengthwise of the same. A securing bolt 2 extends through the slot 72 to be vertically adjustable in position relative to the fixing arm 1. The securing bolt 2 is tightened by a nut 9 thereby fixedly to support on the cycle frame the mounting member 1 together with the sheath engagement means 7.

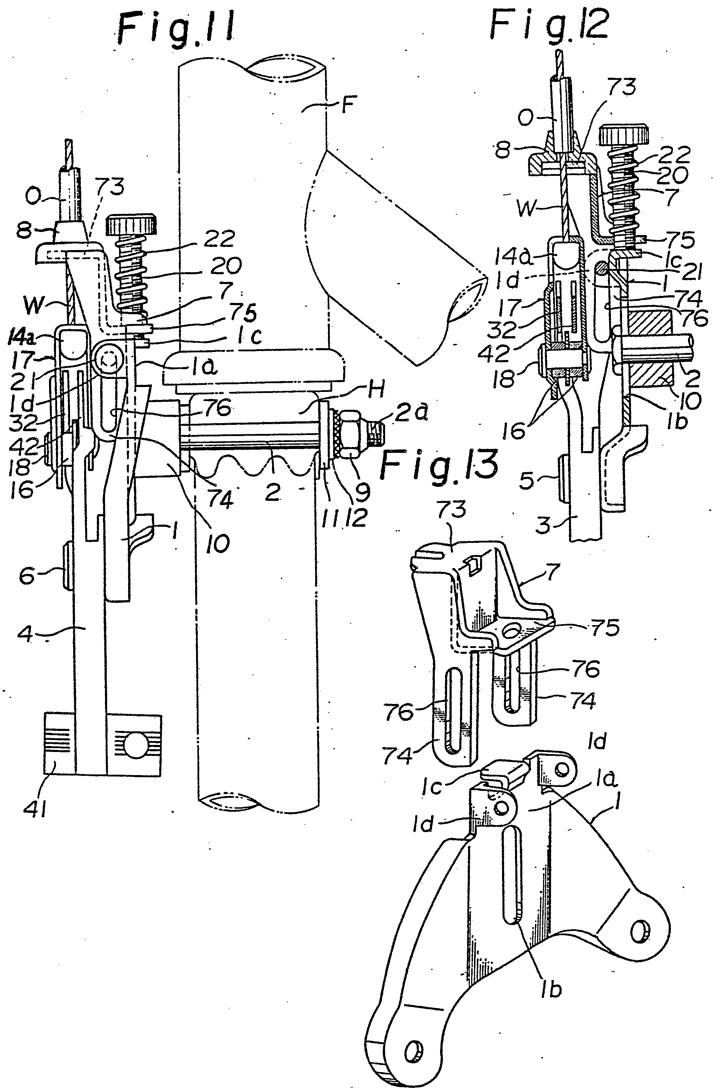

Furthermore, the sheath engagement means 7 could also be formed as shown in a third embodiment illustrated in Figs. 10 to 13, in which the components corresponding to those in Figs. 1 through 9 are represented by the same reference numerals.

As seen in Fig. 13, the sheath engagement means 7 comprises a first support plate 73 extending horizontally from the upper end of the same and supporting an outer stop 8 for the outer sheath O, a pair of side plates 74 extend vertically and opposite each other, and a second support plate 75 connecting the side plates 74 and extending horizontally but reversed relative to the first support plate 73. The side plates 74 are provided with vertical slots 76 respectively, and the second support plate 75 is engaged with an adjustment screw 20. A mounting member 1 carrying the supporting member 7 is provided at the distal end of portion 1a with a stop 1c for the adjustment screw 20 and with a pair of third support plates 1d opposite to each other and extending perpendicularly to the portion 1a. The third support plates 1d contact with the side plates 74 respectively, so that the sheath engagement means 7 may be supported to the fixing arm 1 through pins 21 so as to be vertically adjustable in its position.

In addition, in Figs. 10 to 13, a spring 22 is provided for locking the adjustment screw 20, and is inserted between the head of the adjustment screw 20 and the second support plate 75.

In the third embodiment, the mounting member 1 is fixed to a fork crown H at the front fork of the cycle as shown by the dot-and-dash lines in Figs. 10 and 11.

In this construction, the securing bolt 2, as in the previous embodiment, is used for fixing the mounting member 1 to the fork crown H or changing the fixed position of the mounting member 1. Also, in the third embodiment, the adjustment screw 20 is usable to easily change the mounting position of the sheath engagement means 7 relative to the mounting member 1, in other words, the position of holding of the outer sheath O.

Accordingly, when the control wire W stretches after prolonged used or the brake shoes suffer appreciable wear, in the embodiment in Figs. 1 to 5, the lock nut 81 may be loosened and the outer stop 8 rotated to be positionally adjusted relative to the sheath engagement means 7 thereby adjusting the separation between the ends of the wire W and the sheath O.

In the third embodiment a corresponding adjustment is readily effected by adjustment of the adjust screw 20.

As may be seen in the drawings the brake shoes 31, 41 of the various embodiments are all formed integrally with the respective brake arms 3, 4 so that they are not vertically movable relative thereto as in the case of conventional centre-pull type calliper brakes of the type shown in FR—A—2142650. In addition the brake shoes 31, 41 are inclined relative to the brake arms at an angle greater than 90°.

## Claims

1. A centre-pull type calliper brake device for a cycle, which has a mounting member (1) for mounting on said cycle (B, F) a pair of brake arms (3, 4) pivotally mounted in spaced relationship on said mounting member (1) and having respective brake shoes, a bolt (2) for securing said mounting member (1) to the cycle frame (B), and control wire engagement means for connection of a control wire (W) to said device so that when the control wire (W) is pulled the brake arms (3, 4) are pivoted to bring the brake shoes (31) towards the cycle wheel rim (R) until the brake blocks (13) mounted in said shoes (31) press against the wheel rim (R) thereby exerting a braking action, each of said brake blocks (13) fixed in said shoes (31, 41) on said brake arms (3, 4) having a braking surface (13a) facing a wheel rim (R) disposed between said brake arms (3, 4) and having upper and lower surfaces (13b, 13c) and a pair of side surfaces (13d, 13e) extending from said braking surface (13a) characterized in that said mounting member (1) has a slotted portion (1a) extending generally in the direction of pulling of said control wire (W), control wire sheath engagement means (7) being positioned on said slotted portion (1a) and a slot (1b) in said portion (1a) being substantially elongate and extending in said direction of pulling of the control wire (W), said securing bolt (2) extending through said elongate slot (1b) to secure the mounting member (1) to the cycle frame (B), relative movement between said bolt (2) and slot (1b) providing for vertical adjustment of the mounting member (1) on the cycle frame (B).

2. A brake device according to Claim 1, wherein each of said brake arms (3, 4) is generally in the form of a bell crank lever having a first arm having a distal end at or in proximity to which is provided a respective said brake shoe (31) and a second arm extending towards the second arm of the other of said brake arms (3, 4), said second arm providing a part of the control wire engagement means for engagement with a retainer provided at the free end of the control wire (W).

3. A brake device according to Claim 2, wherein said retainer comprises at least one roller (16), said roller (16) being rotatably supported on a support means (18, 17, 14a) at the free end of said control wire (W).

4. A brake device according to any one of Claims 1 to 3 wherein the control wire sheath engagement means (7) is in the form of a cranked end portion (7) at the free end of the slotted portion (1a) at the mounting member (1).

5. A brake device according to Claim 1 or Claim 2, wherein said control wire sheath engagement means (7) includes a supporting member (8) for the outer sheath (O) of a Bowden cable control wire which supporting member (7) is formed separately from said mounting member (1), said supporting member (8) being mounted on said mounting member (1) so as to be positionally adjustable relative thereto along the direction of movement of the inner wire (W) of the Bowden cable.

6. A brake device according to Claim 5, wherein one of said mounting member and the supporting member is provided with an adjusting bolt providing said positional adjustment, the other member being provided with an abutment portion for abutment with an end of said adjusting bolt.

7. A brake device according to any one of Claims 1 to 6 wherein the longitudinal axes of said brake shoes (31) are inclined with respect to said brake arms (3, 4) at an angle greater than 90°.

8. A brake device according to any one of Claims 1 to 7 wherein said brake shoes (31) are formed integrally with said brake arms (3, 4) and wherein said upper surface (13b) of each of said brake blocks (13) is convexly arcuate and has a radius of curvature smaller than that of the outer peripheral edge of said rim (R).

## Patentansprüche

1. Backenbremsvorrichtung des Mittelzug-typs für ein Fahrrad, mit einem Befestigungsglied (1) zur Anbringung auf besagtem Fahrrad (B, F), einem Paar von Bremsarmen (3, 4), die schwenkbar in Abstand voneinander auf besagtem Befestigungsglied (1) gelagert sind und zugehörige Bremsschuhe haben, einem Bolzen (2) zur Befestigung des besagten Befestigungsgliedes (1) an dem Fahrradrahmen (B), und Betätigungsdraht-Eingriffsmitteln zur Verbindung eines Betätigungsdrahtes (W) mit besagter Vorrichtung, so dass, wenn der Betätigungsdraht (W) angezogen wird, die Bremsarme (3, 4) geschwenkt werden, um die Bremsschuhe (31) zur Radfelge (R) zu bringen bis an besagten Schuhen (31) angebrachte Bremsblöcke (13) gegen die Radfelge (R) drücken unter Ausübung einer Bremswirkung, wobei jeder der besagten Bremsblöcke (13), die in besagten Schuhen (31, 41) auf besagten Bremsarmen (3, 4) fixiert sind, eine Bremsfläche (13a) hat, welche einer zwischen besagten Bremsarmen (3, 4) angeordneten Radfelge (R) gegenüberliegt, und obere und untere Flächen (13b, 13c) sowie ein Paar von Seitenflächen (13d, 13e) hat, welche sich von besagter Bremsfläche (13a) wegerstrecken, dadurch gekennzeichnet, dass das besagte Befestigungsglied (1) eine geschlitzte Partie (1a) hat, die sich im allgemeinen in der Zugrichtung des besagten Betätigungsdrahtes (W) erstreckt, wobei Betätigungsdrahthülsen-Eingriffsmittel (7) auf der besagten geschlitzten Partie (1a) gehaltert sind und wobei ein Schlitz (1b) in besagter Partie (1a) im wesentlichen länglich ist und sich in der besagten Zugrichtung des Betätigungsdrahtes (W) erstreckt, der besagte Betätigungsbolzen (2) sich durch den besagten länglichen Schlitz (1b) hindurcherstreckt, um das Befestigungsglied (1) am Fahrradrahmen (B) zu befestigen, wobei ferner eine Relativbewegung zwischen besagtem Bolzen (2) und Schlitz (1b) eine Vertikaleinstellung des Befestigungsgliedes (1) am Fahrzeugrahmen (B) ergibt.

2. Eine Bremsvorrichtung nach Anspruch 1, in welcher jeder der besagtem Bremsarme (3, 4) in der Form eines Winkelhebels vorliegt, der einen ersten Arm hat mit einem distalen Ende, an oder bei welchem ein zugehöriger Bremsschuh (31) angeordnet ist, und einen zweiten Arm hat, der sich zum zweiten Arm des anderen der besagten Bremsarme (3, 4) hin erstreckt, wobei die beiden zweiten Arme einen Teil der Betätigungsdrahthülsen-Eingriffsmittel bilden zum Eingriff mit einem Rückhalter, der am freien Ende des Betätigungsdrahtes (W) vorhanden ist.

3. Eine Bremsvorrichtung nach Anspruch 2, in welcher der Rückhalter mindestens eine Rolle (16) aufweist, welche Roller (16) drehbar auf einem Tragmittel (18, 17, 14a) am freien Ende des Betätigungsdrahtes (W) abgestützt ist.

4. Eine Bremsvorrichtung nach einem der Ansprüche 1 bis 3, in welcher die Betätigungsdrahthülsen-Eingriffsmittel (7) in der Form eines abgewinkelten Endteiles (7) am freien Ende der geschlitzten Partie (1a) des Befestigungsgliedes (1) vorliegen.

5. Eine Bremsvorrichtung nach Anspruch 1 oder 2, in welcher die besagten Betätigungsdrahthülsen-Eingriffsmittel (7) ein Abstützglied (8) für die äussere Hülle (O) eines Bowdenkabel-Betätigungsdrahtes aufweisen, welches Abstützglied (7) separat vom Befestigungsglied (1) ausgebildet ist, wobei das Abstützglied (8) so am besagten Befestigungsglied (1) angebracht ist, dass es inbezug auf dasselbe lageverstellbar ist in der Bewegungsrichtung des inneren Drahtes (W) des Bowdenkabels.

6. Eine Bremsvorrichtung nach Anspruch 5, in welcher das Befestigungsglied oder das Abstützglied mit einem Einstellbolzen versehen ist, welcher die besagte Lageeinstellung ergibt, wobei das andere Glied mit einem Anschlagteil versehen ist für das Anschlagen an einem Ende des Einstellbolzens.

7. Eine Bremsvorrichtung nach einem der Ansprüche 1 bis 6, in welcher die Längsachsen der besagten Bremsschuhe (31) zu den besagten Bremsarmen (3, 4) unter einem Winkel geneigt sind, der grösser ist als 90°.

8. Eine Bremsvorrichtung nach einem der Ansprüche 1 bis 7, in welcher die besagten Bremsschuhe (31) einteilig mit den Bremsarmen (3, 4) ausgebildet sind und in welcher die besagte obere Fläche (13b) eines jeden der besagten Bremsblöcke (13) konvex gebogen ist und einen Krümmungsradius hat, der grösser ist als jener des äusseren peripheren Randes der besagten Felge (R).

**Revendications**

1. Dispositif de freinage du type à pince avec tirage sur le centre pour cycle, comprenant un organe porteur (1) pour le montage sur le cycle (B, F), une paire de bras de freinage (3, 4) articulés dans des positions espacées sur l'organe porteur (1) et munis de sabots de frein, un boulon (2) pour fixer l'organe porteur sur le cadre (B) du cycle et des moyens d'engagement sur un câble de commande (W), pour relier ce dernier au dispositif de manière à ce que lorsque le câble (W) est tiré, les bras de freinage (3, 4) pivotent et déplacent les sabots de frein (31) vers la jante (R) d'une roue du cycle jusqu'à ce que des garnitures de freins (13) montées sur les dits sabots (31) soient pressées contre la jante (R) ce qui provoque une action de freinage, chacune de ces garnitures (13) fixées aux sabots (31, 41) disposés sur les bras de freinage (3, 4) présentant une surface de freinage (13a) disposée en face de la jante (R) d'une roue, qui se trouve entre les dits bras de freinage (3, 4), des surfaces supérieure et inférieurs (13b, 13c) et une paire de surfaces latérales (13d, 13e), adjacentes à la surface de freinage (13a), caractérisé en ce que l'organe porteur (1) comprend une partie (1a) fendue s'étendant dans la direction de traction du câble de commande (W), en ce que des moyens (7) d'engagement sur la gaine du câble sont placés sur la dite partie (1*a*) fendue et en ce que cette dernière présente une fente (1*b*) qui est sensiblement allongée et s'étend dans la dite direction de tirage du câble (*W*), le boulon de fixation (2) étant engagé dans cette fente (1*b*) de manière à fixer l'organe porteur (1) au cadre (*B*) du cycle, en permettant un adjustement vertical de l'organe porteur (1) sur le cadre (*B*) par déplacement relatif du boulon (2) dans la fente.

2. Dispositif selon la revendication 1, dans lequel chacun des dits bras de freinage (3, 4) a la forme générale d'un levier coudé, avec un premier bras dont une extrémité éloignée est pourvue à cette extrémité ou au voisinage de celle-ci d'un des dits sabors (31) et avec un second bras qui s'étend vers le second bras de l'autre bras de freinage (3, 4), les dits seconds bras constituant une partie des dits moyens d'engagement sur la câble de commande et coopérant avec un élément de retenue qui est placé à l'extrémité libre du câble (*W*).

3. Dispositif de freinage selon la revendication 2, dans lequel le dit élément de retenue comprend au moins un galet (16) monté rotativement sur un support (18, 17, 14*a*) à l'extrémité libre du câble de commande (*W*).

4. Dispositif de freinage selon l'une quelconque des revendications 1 à 3, caractérisé en ce que les moyens d'engagement (7) sur la gaine du câble de commande consistent en une partie extrême coudée (7) de la dite partie fendue (1*a*) de l'organe porteur (1).

5. Dispositif de freinage selon la revendication 1 ou la revendication 2, dans lequel les dits moyens d'engagement (7) sur la gaine du câble comportent un élément de support (8) pour la gaine extérieure (*O*) d'un câble de commande à gaine souple, cet élément de support (7) étant distinc de l'organe porteur (1) et monté sur celui-ci de manière à être adjustable en position dans la direction de déplacement de l'âme (*W*) du câble à gaine souple.

6. Dispositif selon la revendication 5, dans lequel l'un des dits organes, l'élément de support ou l'organe porteur est muni d'une tige filetée, permettant le dit adjustement en position, l'autre organe étant muni d'un épaulement capable de venir en butée contre la dite tige filetée.

7. Dispositif selon l'une quelconque des revendications 1 à 6, dans lequel les axes longitudinaux des sabots (31) sont inclinés par rapport aux bras de freinage (3, 4) d'un angle plus grand que 90°.

8. Dispositif selon l'une quelconque des revendications 1 à 7, dans lequel les sabors de freinage (31) sont formés d'une pièce avec les bras de freinage (3, 4) et la surface supérieure (13*b*) de chacune des dites garnitures (13) est incurvée dans le sens convexe, son rayon de courbure étant plus petit que celui du bord périphérique externe de la jante (*R*).

Fig.1

Fig.2

0010417

Fig.3

Fig.4

Fig.6

Fig.5

**Fig.7**

**Fig.8**

0010417

**Fig.9**

**Fig.10**

Fig.11

0010417

Fig.12

Fig.13

4